(19) Europäisches Patentamt / European Patent Office / Office européen des brevets

(11) **EP 2 544 345 A1**

(12) **DEMANDE DE BREVET EUROPEEN**

(43) Date de publication:
**09.01.2013 Bulletin 2013/02**

(51) Int Cl.:
***H02M 3/07*** *(2006.01)*

(21) Numéro de dépôt: **12174900.6**

(22) Date de dépôt: **04.07.2012**

| | |
|---|---|
| (84) Etats contractants désignés:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Etats d'extension désignés:<br>**BA ME** | (71) Demandeur: **Commissariat à l'Énergie Atomique<br>et aux Énergies Alternatives<br>75015 Paris (FR)** |
| (30) Priorité: **08.07.2011 FR 1156236** | (72) Inventeur: **Mainguet, Jean-François<br>38100 Grenoble (FR)**<br><br>(74) Mandataire: **Ilgart, Jean-Christophe<br>BREVALEX<br>95 rue d'Amsterdam<br>75378 Paris Cedex 8 (FR)** |

(54) **Circuit multiplicateur de tension**

(57)     Circuit (100) multiplicateur d'une tension Vcc appliquée sur une première entrée du circuit, comportant :
- une première (104) et une deuxième (106) capacités ;
- des moyens de liaison (108, 110, 112, 114) aptes à relier électriquement, dans un premier état, une première borne de chacune des capacités à un potentiel électrique nul et une deuxième borne des capacités à un potentiel électrique Vcc, et aptes à relier électriquement, dans un deuxième état, la première borne de la première capacité au potentiel Vcc, la deuxième borne de la deuxième capacité au potentiel nul, la deuxième borne de la première capacité à une première borne de sortie, et la première borne de la deuxième capacité à une deuxième borne de sortie ;
- une deuxième entrée (116) destinée à recevoir un signal de commande commandant le passage d'un état à un autre.

FIG.12

EP 2 544 345 A1

**Description**

**DOMAINE TECHNIQUE**

L'invention concerne un circuit multiplicateur de tension, par exemple utilisé pour alimenter électriquement une ou plusieurs LED (diode électroluminescente) à partir d'une tension d'entrée inférieure à une tension de seuil de la ou des LED.

Le circuit multiplicateur de tension est avantageusement utilisé pour faire clignoter une ou plusieurs LED.

**ÉTAT DE LA TECHNIQUE ANTÉRIEURE**

Il se pose parfois le problème de devoir alimenter électriquement une charge, par exemple une LED, à partir d'une tension qui ne soit pas suffisante pour alimenter correctement de manière continue la charge. Par exemple, la tension de seuil d'allumage d'une LED est relativement élevée : environ 1,6 V pour une LED rouge, environ 3 V pour une LED bleue, et même 3,5 V pour certaines LED blanches à haute luminosité.

Le courant traversant la LED dépend de la tension appliquée à ses bornes et la luminosité obtenue est sensiblement linéaire du courant injecté lorsque la tension à ses bornes est supérieure à sa tension de seuil. Ainsi, une cellule photovoltaïque délivrant généralement une tension égale à environ 0,7 V est insuffisante pour alimenter à elle seule correctement une LED.

Afin d'augmenter la valeur d'une tension, il est connu d'utiliser des circuits à capacité commutée. Un multivibrateur est utilisé pour faire varier la tension aux bornes de la capacité. Lorsque l'on souhaite obtenir en sortie une tension supérieure au double de celle appliquée en entrée, cela implique de disposer plusieurs capacités commutées en cascade.

Or, dans ce cas, les pertes deviennent très importantes au niveau des diodes disposées entre les capacités. De plus, une telle mise en cascade fonctionne très mal à faible tension car il est nécessaire de générer des signaux de phase. Enfin, des phénomènes de saturation viennent également perturber le fonctionnement d'un tel système.

Pour augmenter la valeur d'une tension, il est également connu d'utiliser des circuits appelés « boost-converter », ou « step-up converter », qui utilisent classiquement une inductance et un multivibrateur pour fonctionner. Le défaut de ce genre de circuits est le rendement, qui ne devient intéressant (par exemple égal à environ 70 %) que lorsque la consommation de courant devient importante.

A très basse consommation (comme c'est le cas pour l'alimentation électrique d'une LED), ce type de circuits n'est pas efficace car non seulement le rendement est faible, mais le circuit consomme également beaucoup de courant à vide (par exemple de l'ordre d'environ 1 mA).

**EXPOSÉ DE L'INVENTION**

Un but de la présente invention est de proposer un circuit multiplicateur de tension permettant de multiplier par exemple d'un facteur égal à environ 3 une tension d'entrée, d'alimenter une charge électrique, par exemple une LED, à partir d'une faible tension d'entrée, par exemple inférieure à la tension de seuil de la LED, consommant moins de courant que les circuits de l'art antérieur, qui soit peu cher à réaliser et qui présente un faible encombrement.

Pour cela, l'invention propose un circuit multiplicateur d'une tension Vcc destinée à être appliquée sur au moins une première entrée du circuit, comportant au moins :

- une première et une deuxième capacités aptes à stocker des charges électriques ;
- des moyens de couplage aptes à coupler électriquement, dans un premier état, une première borne de chacune des capacités à un potentiel électrique nul et une deuxième borne de chacune des capacités à un potentiel électrique égal à Vcc, et aptes à coupler électriquement, dans un deuxième état, la première borne de la première capacité au potentiel électrique Vcc, la deuxième borne de la deuxième capacité au potentiel électrique nul, la deuxième borne de la première capacité à une première borne de sortie du circuit, et la première borne de la deuxième capacité à une deuxième borne de sortie du circuit;
- des moyens de commande aptes à commander le passage d'un état, correspondant au premier ou au deuxième état, à un autre état, correspondant respectivement au deuxième état ou au premier état.

Il est également proposé un circuit multiplicateur d'une tension Vcc destinée à être appliquée sur au moins une première entrée du circuit, comportant au moins :

- une première et une deuxième capacités aptes à stocker des charges électriques ;
- des moyens de liaison aptes à relier électriquement, dans un premier état, une première borne de chacune des capacités à un potentiel électrique nul et une deuxième borne de chacune des capacités à un potentiel électrique égal à Vcc, et aptes à relier électriquement, dans un deuxième état, la première borne de la première capacité au potentiel électrique Vcc, la deuxième borne de la deuxième capacité au potentiel électrique nul, la deuxième borne de la première capacité à une première borne de sortie du circuit, et la première borne de la deuxième capacité à une deuxième borne de sortie du circuit ;
- une deuxième entrée destinée à recevoir un signal de commande commandant le passage d'un état, correspondant au premier ou au deuxième état, à un autre état, correspondant respectivement au deuxième état ou au premier état.

Le circuit multiplicateur permet, dans une première phase correspondant au premier état, de charger électriquement les capacités en utilisant la tension d'entrée Vcc, puis, dans une deuxième phase correspondant au deuxième état, d'utiliser le phénomène de pompe de charges des capacités pour que la charge (par exemple une LED) « voit » entre ses bornes une tension sensiblement égale à environ 3 Vcc. En répétant ces deux phases, on peut ainsi faire clignoter une LED par exemple à très basse fréquence, en consommant le moins d'énergie possible notamment grâce à l'absence d'inductance dans ce circuit.

Le circuit multiplicateur permet d'appliquer aux bornes de la charge une tension sous la forme d'un « flash », c'est-à-dire pendant une courte durée, qui permet par exemple d'illuminer une LED pendant une durée correspondant au temps de descente de la tension sous la tension de seuil de la LED.

Le circuit selon l'invention permet par exemple, à partir d'une source d'alimentation délivrant une tension Vcc égale à environ 1 V, d'allumer une LED qui réclame normalement une tension égale à 3 V pour émettre de la lumière.

Le circuit peut fonctionner avantageusement avec une tension Vcc comprise entre environ 0,8 V et 1,8 V.

Les moyens de couplage, ou moyens de liaison électrique, peuvent comporter :

- un premier moyen de connexion apte à relier électriquement, dans le premier état, la première borne de la première capacité au potentiel électrique nul, ou, dans le deuxième état, au potentiel électrique Vcc ;
- un deuxième moyen de connexion apte à relier électriquement, dans le premier état, la deuxième borne de la première capacité au potentiel électrique Vcc, ou, dans le deuxième état, à la première borne de sortie ;
- un troisième moyen de connexion apte à relier électriquement, dans le premier état, la première borne de la deuxième capacité au potentiel électrique nul, ou, dans le deuxième état, à la deuxième borne de sortie ;
- un quatrième moyen de connexion apte à relier électriquement, dans le premier état, la deuxième borne de la deuxième capacité au potentiel électrique Vcc, ou, dans le deuxième état, au potentiel électrique nul ;
  chacun des premier, deuxième, troisième et quatrième moyens de connexion pouvant comporter au moins un commutateur ou un inverseur CMOS. De plus, chacun des premier, deuxième, troisième et quatrième moyens de connexion peut être réalisé avec des transistors MOS.

Les moyens de commande peuvent comporter une deuxième entrée du circuit destinée à recevoir un signal de commande.

Le premier moyen de connexion peut comporter un inverseur CMOS destiné à être alimenté électriquement par la tension Vcc, la deuxième entrée du circuit peut être reliée électriquement à une entrée dudit inverseur CMOS et une sortie dudit inverseur CMOS peut être reliée électriquement à la première borne de la première capacité.

Dans ce cas, le deuxième et le troisième moyens de connexion peuvent comporter chacun un commutateur destiné à être commandé par un signal délivré sur la sortie de l'inverseur CMOS du premier moyen de connexion.

Le quatrième moyen de connexion peut comporter un inverseur CMOS destiné à être alimenté électriquement par la tension Vcc, la première borne de la première capacité peut être reliée électriquement à une entrée de l'inverseur CMOS du quatrième moyen de connexion et une sortie de l'inverseur CMOS du quatrième moyen de connexion peut être reliée électriquement à la deuxième borne de la deuxième capacité.

Le deuxième moyen de connexion peut comporter un inverseur CMOS comprenant au moins deux transistors MOS dont des sources peuvent être reliées électriquement au potentiel électrique Vcc et à la première borne de sortie du circuit, la deuxième borne de la première capacité peut être reliée électriquement à une sortie de l'inverseur CMOS du deuxième moyen de connexion et la première borne de la première capacité peut être reliée électriquement à une entrée de l'inverseur CMOS du deuxième moyen de connexion.

Le troisième moyen de connexion peut comporter un inverseur CMOS comprenant au moins deux transistors MOS dont des sources peuvent être reliées électriquement au potentiel électrique nul et à la deuxième borne de sortie du circuit, la première borne de la deuxième capacité peut être reliée électriquement à une sortie de l'inverseur CMOS du troisième moyen de connexion et la deuxième borne de la deuxième capacité peut être reliée électriquement à une entrée de l'inverseur CMOS du troisième moyen de connexion.

Les moyens de couplage et les moyens de commande peuvent comporter :

- un microcontrôleur apte à relier électriquement, dans le premier état, la première borne de la première capacité au potentiel électrique nul, ou, dans le deuxième état, au potentiel électrique Vcc, et apte à relier électriquement, dans le premier état, la deuxième borne de la deuxième capacité au potentiel électrique Vcc, ou, dans le deuxième état, au potentiel électrique nul ;
- au moins une charge électrique destinée à être alimentée électriquement par une tension délivrée entre la première et la deuxième borne de sortie du circuit multiplicateur et présentant une tension de seuil destinée à être inférieure à la tension Vcc ;

- une première résistance électrique reliée électriquement entre le potentiel électrique Vcc et la première borne de sortie du circuit ;
- une deuxième résistance électrique reliée électriquement entre la deuxième borne de sortie du circuit et le potentiel électrique nul.

L'invention concerne également un dispositif électronique comportant au moins :

- un circuit multiplicateur tel que défini précédemment ;
- au moins une charge électrique destinée à être alimentée électriquement par une tension délivrée entre la première et la deuxième borne de sortie du circuit multiplicateur.

La charge électrique peut comporter au moins une LED. Dans ce cas, la tension délivrée en sortie du circuit multiplicateur peut être supérieure à la tension de seuil de la LED.

Le dispositif peut comporter en outre :

- des moyens d'alimentation électrique aptes à délivrer sur une sortie une tension électrique Vcc ;
- des deuxièmes moyens de commande aptes à délivrer sur une sortie un signal de commande oscillant entre deux valeurs distinctes ;
  et dans lequel la première entrée du circuit multiplicateur peut être reliée électriquement à la sortie des moyens d'alimentation électrique, et dans lequel les moyens de commande, par exemple la deuxième entrée, du circuit multiplicateur peut être reliée électriquement à la sortie des deuxièmes moyens de commande.

Les moyens d'alimentation électrique peuvent comporter des moyens de conversion d'énergie photovoltaïque couplés à au moins une capacité apte à stocker une énergie fournie par les moyens de conversion et à fournir aux bornes de ladite capacité la tension électrique Vcc. De tels moyens d'alimentation permettent au dispositif d'être totalement autonome et de ne pas nécessiter d'entretien (pas de remplacement de pile par exemple). Les moyens de conversion d'énergie photovoltaïque et la capacité de stockage de l'énergie convertie forment un système d'accumulation d'énergie ayant notamment pour avantage, par rapport à une batterie électrochimique, d'éviter une dégradation rapide des performances de stockage de l'énergie au cours du temps (la capacité de stockage peut être efficace sur au moins un million de cycle, contrairement à une batterie dont les performances se dégradent généralement à partir d'un millier de cycles) et ne nécessite pas de surveiller les tensions et la charge électrique réalisée (surveillance permettant d'éviter les surcharges et les décharges profondes dans le cas d'une batterie).

La capacité de stockage de l'énergie convertie peut avoir une capacité supérieure à environ 0,1 Farad. Une telle capacité a notamment pour avantage d'occuper un très faible volume (généralement d'environ 1 cm$^3$ par Farad). Les moyens de conversion d'énergie photovoltaïque peuvent comporter au moins une cellule photovoltaïque, ou une ou plusieurs diodes PIN à la place de la cellule photovoltaïque qui présentent un très faible encombrement (quelques mm$^2$).

Dans une variante, les moyens d'alimentation électrique peuvent comporter au moins une pile. Dans une autre variante, les moyens d'alimentation électrique peuvent comporter au moins une capacité apte à stocker des charges électriques issues du signal de commande.

Les deuxièmes moyens de commande peuvent comporter au moins un oscillateur ou un multivibrateur, et peuvent être couplés aux moyens d'alimentation électrique et au circuit multiplicateur.

La charge électrique peut comporter une pluralité de LED et au moins un multiplexeur apte à coupler alternativement chacune des LED avec la première et la deuxième bornes de sortie du circuit multiplicateur.

Dans ce cas, le multiplexeur peut être couplé à au moins un compteur binaire apte à commander le couplage entre la pluralité de LED et l'une de la première et de la deuxième borne de sortie du circuit multiplicateur. On peut ainsi réaliser un chenillard allumant successivement les différentes LED.

L'invention concerne également un procédé de multiplication d'une tension Vcc, comportant au moins les étapes de :

a) couplage, ou application, d'un potentiel électrique nul à, ou sur, une première borne de chacune d'une première et d'une deuxième capacités aptes à stocker des charges électriques, et d'un potentiel électrique égal à Vcc à, ou sur, une deuxième borne de chacune des deux capacités, chargeant électriquement la première et la deuxième capacité, puis

b) application du potentiel électrique Vcc sur la première borne de la première capacité, et d'un potentiel électrique nul sur la deuxième borne de la deuxième capacité, une tension de sortie correspondant à la tension Vcc multipliée étant récupérée entre la deuxième borne de la première capacité et la première borne de la deuxième capacité.

Les étapes a) et b) peuvent être répétées successivement, la tension de sortie pouvant être appliquée sur des bornes d'au moins une LED.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

- les figures 1 à 4 représentent un circuit multiplicateur de tension, objet de la présente invention, selon différents modes de réalisation ;
- la figure 5 représente schématiquement un dispositif électronique, objet de la présente invention, comportant un circuit multiplicateur de tension, également objet de la présente invention ;
- les figures 6, 7A et 7B représentent des exemples de réalisation d'éléments du dispositif électronique représenté sur la figure 5 ;
- les figures 8 à 11 représentent des dispositifs électroniques, objets de la présente invention, comportant un circuit multiplicateur de tension, également objet de la présente invention ;
- la figure 12 représente un circuit multiplicateur de tension, objet de la présente invention, selon un autre mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

**EXPOSÉ DÉTAILLÉ DE MODES DE RÉALISATION PARTICULIERS**

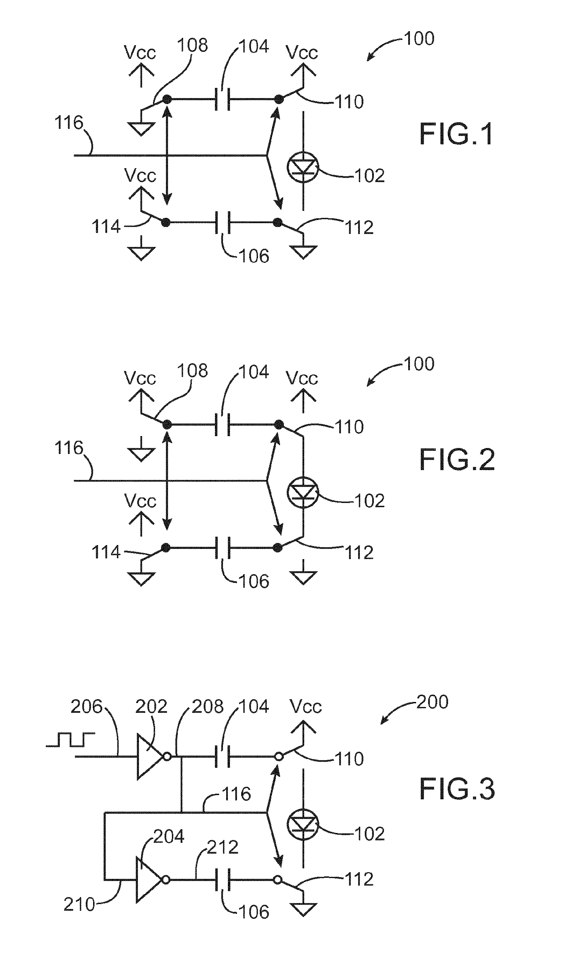

On se réfère tout d'abord aux figures 1 et 2 qui représentent un circuit multiplicateur de tension 100 selon un premier mode de réalisation. Le circuit 100 fonctionne ici comme une pompe de charge symétrique permettant environ de tripler la valeur d'une tension d'alimentation Vcc et d'appliquer cette tension égale à environ 3.Vcc aux bornes d'une charge 102, ici une LED.

Le circuit 100 comporte deux capacités, ou condensateurs, 104 et 106, et quatre moyens de liaison électriques, ou moyens de couplage ou de connexion, correspondant ici à des commutateurs 108, 110, 112 et 114 basculant simultanément d'un premier état, correspondant à une phase de charge des capacités (état représenté sur la figure 1), à un deuxième état correspondant à une phase de décharge des capacités 104 et 106 dans la LED 102 (état représenté sur la figure 2). Les quatre commutateurs sont commandés par des moyens de commande correspondant ici à un même signal de commande 116 appliqué en entrée du circuit 100 et oscillant entre deux valeurs, par exemple entre 0 et +Vcc. Lorsque les commutateurs 108, 110, 112 et 114 sont adaptés pour être commandés par un signal d'une autre valeur, le circuit multiplicateur de tension 100 peut comporter des moyens permettant d'adapter la valeur du signal de commande en fonction de la valeur destinée à être reçue par les commutateurs 108, 110, 112 et 114. Le signal de commande 116 correspond par exemple à un signal carré.

La première capacité 104 comporte une première borne, ou extrémité, reliée électriquement à un premier commutateur 108, et une deuxième borne reliée électriquement à un deuxième commutateur 110. La seconde capacité 106 comporte une première borne reliée électriquement à un troisième commutateur 112 et une deuxième borne reliée électriquement à un quatrième commutateur 114.

Lors de la phase de charge des capacités 104 et 106, les quatre commutateurs 108, 110, 112 et 114 sont dans un état de commutation tel que les capacités 104 et 106 comportent chacune leur première borne reliée électriquement au potentiel électrique Vcc et leur seconde borne reliée électriquement à un potentiel électrique nul tel que la masse.

Lorsque les quatre commutateurs 108, 110, 112 et 114 basculent simultanément dans le second état de commutation correspondant à la phase de décharge des capacités (figure 2), la première borne de la première capacité 104 reliée au premier commutateur 108 passe d'un potentiel nul au potentiel +Vcc, et la seconde extrémité de la première capacité 104 couplée au deuxième commutateur 110 est alors reliée à une première borne de la LED 102. La deuxième borne de la deuxième capacité 106 reliée au quatrième commutateur 114 passe d'un potentiel égale à +Vcc à un potentiel nul, et la première borne de la seconde capacité 106 est reliée à une seconde borne de la LED 102.

Ainsi, lorsque les commutateurs 108, 110, 112 et 114 passent du premier état représenté sur la figure 1 au second état représenté sur la figure 2, et grâce au phénomène de pompe de charges, un potentiel égal à +2.Vcc (potentiel +Vcc se trouvant sur la première borne de la première capacité 104 + potentiel +Vcc entre les deux bornes de la première capacité 104) se retrouve appliqué sur la première borne de la LED 102 (celle reliée au deuxième commutateur 110) et un potentiel égal à -Vcc (correspondant au potentiel entre les deux bornes de la deuxième capacité 106) se retrouve appliqué sur la seconde borne de la LED 102 (celle reliée au troisième commutateur 112). Ainsi, juste après le passage des commutateurs 108, 110, 112 et 114 du premier état au second état, une tension triplée par rapport à la tension d'alimentation Vcc est appliquée aux bornes de la LED 102. La tension de 3.Vcc étant supérieure à la tension de seuil de la LED 102 (qui peut être comprise entre environ 1,5 V et 3,5 V selon la couleur de la LED 102), la LED 102 devient alors électriquement conductrice et les capacités 104 et 106 se déchargent à travers la LED 102 jusqu'à ce que le potentiel aux bornes de la LED 102 devienne inférieur à sa tension de seuil. Lors de cette décharge, la LED 102 est alimentée électriquement et émet un rayonnement lumineux dont la durée correspond à la durée de décharge des capacités 104 et 106 jusqu'à atteindre la tension de seuil de la LED 102.

Après que la tension aux bornes de la LED 102 soit devenue inférieure à la tension de seuil de la LED 102, les commutateurs 108, 110, 112 et 114 repassent dans le premier état, permettant de recharger les capacités 104 et 106, et le cycle 1er état - 2ème état est répété afin de faire clignoter la LED 102.

Les durées des phases de charge et décharges des capacités 104 et 106, c'est-à-dire les durées des états dans lesquels se trouvent les commutateurs 108, 110, 112 et 114 seront fonction de la fréquence du signal de commande 116. Ce signal de commande peut par exemple être un signal carré de fréquence égale à environ 0,5 Hz. Dans ce cas, chaque phase a une durée égale à environ 1 seconde.

Le circuit multiplicateur de tension 100 permet de fournir à la LED 102 une tension suffisante pour éclairer la LED 102 pendant une certaine durée, ce qui permet d'émettre un « flash » lumineux par la LED, dont la durée dépend des valeurs des capacités 104, 106 et de la résistance équivalente de la LED 102, à partir d'une tension Vcc par exemple égale à environ 1 volt, aussi bien pour une LED de couleur rouge dont la tension de seuil est égale à environ 1,6 V que pour une LED de couleur bleue dont la tension de seuil est égale à environ 3 V, ou encore une LED de couleur blanche dont la tension de seuil est proche de 3,5 V, et cela avec une excellente efficacité énergétique car si les capacités 104 et 106 n'ont pas pu se décharger complètement, alors la charge est conservée pour le prochain cycle charge - décharge des capacités 104 et 106.

Les valeurs des capacités 104 et 106 sont par exemple comprises entre environ 1 $\mu$F et 10 $\mu$F, en fonction par exemple de l'effet recherché (puissance de la LED 102). Pour des capacités 104 et 106 de valeurs égales à environ 10 $\mu$F et une LED de résistance équivalente égale à environ 100 $\Omega$, la durée du flash de la LED 102 est égale à environ 1 ms ($\tau$ = RC).

Les quatre commutateurs 108, 110, 112 et 114 à commande simultanée, c'est-à-dire les moyens de couplage du circuit 100, peuvent être réalisés sous la forme d'un unique composant, correspondant par exemple au circuit TS3A44159 fabriqué par Texas Instruments (qui fonctionne à partir d'une tension égale à environ 1,65 V) ou au circuit ADG734 fabriqué par Analog Devices (qui fonctionne à partir d'environ 1,8V). La valeur de la tension Vcc peut être adaptée et correspondre à la tension minimale à partir de laquelle le composant formant les quatre commutateurs 108, 110, 112 et 114 fonctionne.

Les commutateurs 108, 110, 112 et 114 sont de préférence du type « break-before-make», c'est-à-dire que lors d'un passage d'un premier état à un deuxième état, la liaison électrique formée lors du premier état est ouverte avant de basculer et former la liaison électrique du deuxième état, ce qui évite des courts-circuits intempestifs qui peuvent augmenter la consommation du circuit multiplicateur 100.

La figure 3 représente un circuit multiplicateur de tension 200 selon un deuxième mode de réalisation.

Comme le circuit 100 précédemment décrit, le circuit multiplicateur 200 forme une pompe de charge symétrique permettant de tripler la valeur d'une tension d'alimentation Vcc et d'appliquer cette tension triple aux bornes de la LED 102.

Par rapport au circuit 100, le premier et le quatrième commutateurs 108 et 114 sont remplacés par deux inverseurs 202 et 204 de type CMOS alimentés par la tension +Vcc. Le premier inverseur 202 comporte une entrée 206 (reliée aux grilles des deux transistors NMOS et PMOS formant l'inverseur 202) sur laquelle est appliqué le signal de commande carré dont la valeur passe de 0 à +Vcc. Le premier inverseur 202 comporte une sortie 208 (reliée aux drains des deux transistors MOS de l'inverseur 202) reliée électriquement à la première borne de la première capacité 104 et à une entrée 210 du second inverseur 204 (correspondant aux grilles des deux transistors NMOS et PMOS du second inverseur 204). Une sortie 212 du second inverseur 204 (reliée électriquement aux drains des deux transistors MOS du second inverseur 204) est reliée électriquement à la deuxième extrémité de la deuxième capacité 106. Le signal de commande 116 commandant la commutation des deuxième et troisième commutateurs 110 et 114 correspond au signal obtenu en sortie du premier inverseur 202, et correspond donc au signal inverse à celui appliqué sur l'entrée 206 du premier inverseur 202. Les inverseurs 202 et 204 sont alimentés par la tension Vcc.

Lorsque le signal appliqué sur l'entrée 206 du premier inverseur 202 a une valeur égale à +Vcc, ce dernier délivre sur sa sortie 208 un signal de potentiel nul, ce potentiel nul étant donc appliqué à la première borne de la première capacité 104. Le deuxième commutateur 110 relie alors la deuxième borne de la première capacité 104 au potentiel +Vcc. Ce signal de potentiel nul est également appliqué sur l'entrée 210 du deuxième inverseur 204. Le deuxième inverseur 204 délivre donc sur sa sortie 212 un signal de potentiel égal à +Vcc, ce potentiel étant appliqué sur la deuxième borne de la deuxième capacité 106. Le troisième commutateur 112 relie la première extrémité de la deuxième capacité 106 à la masse.

Ainsi, lorsque le signal appliqué sur l'entrée 206 du premier inverseur 202 a une valeur égale à +Vcc, le circuit 200 est dans une configuration similaire au premier état précédemment décrit en liaison avec la figure 1, c'est-à-dire dans un état de charge des capacités 104 et 106.

Lorsque le signal appliqué sur l'entrée 206 du premier inverseur 202 change de valeur et passe à une valeur nulle, ce dernier délivre sur sa sortie 208 un signal de potentiel égal à +Vcc, ce potentiel +Vcc étant donc appliqué sur la première borne de la première capacité 104. Le signal de sortie du premier inverseur 202 qui correspond au signal de commande 116 fait passer les commutateurs 110 et 112 dans leur second état de commutation, reliant alors électriquement la deuxième borne de la première capacité 104 et la première borne de la deuxième capacité 106 aux bornes de la LED 102. Ce signal de potentiel +Vcc est également appliqué sur l'entrée 210 du deuxième inverseur 204. Le deuxième inverseur 204 délivre donc sur sa sortie 212 un signal de potentiel nul, ce potentiel étant appliqué sur la deuxième extrémité de la deuxième capacité 106.

Ainsi, lorsque le signal appliqué sur l'entrée 206 du premier inverseur 202 a une valeur nulle, le circuit 200 est dans une configuration similaire au second état précédemment décrit en liaison avec la figure 2, c'est-à-dire dans une état de décharge des capacités 104 et 106 dans la LED 102, une tension égale à +3.Vcc étant appliquée aux bornes de la LED 102 lors du passage du premier au second état.

Comme les commutateurs 110 et 112, les inverseurs 202 et 204 présentent de préférence une propriété du type « break-before-make » se traduisant par un décalage dans le temps des envois des signaux de commande aux MOS N et P. Ce décalage temporel peut être obtenu via plusieurs inverseurs ou capacités permettant de décaler dans le temps ces signaux.

Dans une variante, il est possible qu'un seul des commutateurs 108 ou 114 soit remplacé par un inverseur CMOS.

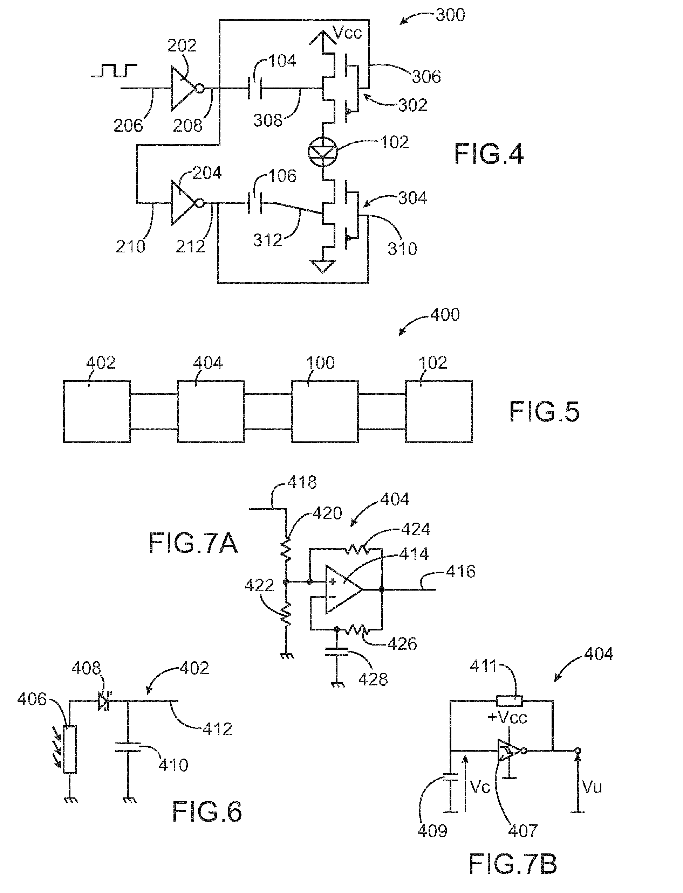

La figure 4 représente un circuit multiplicateur de tension 300 selon un troisième mode de réalisation.

Comme les circuits 100 et 200 précédemment décrits, le circuit 300 forme une pompe de charge symétrique permettant de tripler la valeur d'une tension d'alimentation Vcc appliquée en entrée du circuit 300.

Par rapport au circuit 200, le deuxième et le troisième commutateurs 110 et 112 sont remplacés par deux inverseurs CMOS 302 et 304, appelés troisième et quatrième inverseurs. Les troisième et quatrième inverseurs 302 et 304 sont alimentés différemment des premier et deuxième inverseurs 202, 204 (qui sont alimentés classiquement entre la masse et le potentiel +Vcc). En effet, la sortie 208 du premier inverseur 202 est reliée électriquement à une entrée 306 du troisième inverseur 302, c'est-à-dire reliée électriquement aux grilles des deux transistors NMOS et PMOS du troisième inverseur 302. La tension +Vcc est appliquée sur la source du transistor NMOS du troisième inverseur 302 et la source du transistor PMOS du troisième inverseur 302 est reliée électriquement à l'une des bornes de la LED 102. Une sortie 308 du troisième inverseur 302 (reliée aux drains des deux transistors MOS du troisième inverseur 302) est reliée électriquement à la deuxième extrémité de la première capacité 104. La sortie 212 du deuxième inverseur 204 est reliée électriquement à une entrée 310 du quatrième inverseur 304, c'est-à-dire reliée électriquement aux grilles des deux transistors NMOS et PMOS du quatrième inverseur 304. La source du transistor PMOS du quatrième inverseur 304 est reliée à la masse et la source du transistor NMOS du quatrième inverseur 304 est reliée électriquement à l'autre borne de la LED 102. Une sortie 312 du quatrième inverseur 304 (reliée aux drains des deux transistors MOS du quatrième inverseur 304) est reliée électriquement à la première extrémité de la deuxième capacité 106.

Le fonctionnement du circuit 300 est similaire au fonctionnement des précédents circuits 100 et 200, le changement de valeur du signal appliqué sur l'entrée 206 du premier inverseur 202 faisant passer le circuit 300 d'un état de commutation à l'autre, chargeant et déchargeant successivement les capacités 104 et 106, une tension égale à +3.Vcc étant appliquée aux bornes de la LED 102 lors du passage du premier au second état.

Comme précédemment, les inverseurs CMOS 302 et 304 peuvent présenter une propriété du type «break-before-make».

Les différents inverseurs peuvent être remplacés par des MOSFET réalisant la commutation d'un état à l'autre comme précédemment décrit dans le circuit.

Dans une variante, il est possible que seulement l'un des commutateurs 110 et 112 soit remplacé par un inverseur MOS. De plus, l'un ou les deux inverseurs CMOS 202 et 204 peuvent être remplacés par l'un ou les deux commutateurs 104 et 114.

Dans tous les modes de réalisation précédemment décrits (circuits 100, 200 et 300), il est possible que lors de la phase de charge des capacités 104 et 106, la tension d'alimentation appliquée aux bornes des capacités 104 et 106 soit limitée en insérant par exemple une résistance entre le deuxième commutateur 110, ou le troisième inverseur 302, et le potentiel d'alimentation +Vcc, et une résistance entre le quatrième commutateur 114, ou le deuxième inverseur 204, et le potentiel d'alimentation +Vcc. Ces résistances permettent de limiter le courant de charges des capacités 104, 106 et d'éviter d'éventuelles chutes de tension brusques, dans le circuit multiplicateur de tension, liées à des appels de courant trop importants sur la source de tension, au moment des commutations.

La figure 5 représente un dispositif électronique 400 comportant le circuit multiplicateur de tension 100 couplé à la LED 102. Le dispositif 400 comporte également des moyens d'alimentation 402, fournissant la tension Vcc, reliés électriquement à des moyens de commande 404 aptes à délivrer sur une sortie un signal de commande oscillant entre deux valeurs distinctes, correspondant par exemple à un oscillateur ou un multivibrateur, fournissant le signal de commande 116 au circuit multiplicateur de tension 100. Dans d'autres variantes, le circuit multiplicateur de tension 100 peut être remplacé par l'un des circuits 200 ou 300 précédemment décrits.

La figure 6 représente un exemple de réalisation des moyens d'alimentation 402. Ces moyens 402 comportent une cellule photovoltaïque 406, par exemple de type amorphe, dont une borne est reliée électriquement à une diode Schottky 408 elle-même reliée électriquement à une capacité de stockage 410 par exemple égale à environ 0,2 F, et dont la valeur peut être supérieure à environ 0,1 F. La cellule photovoltaïque 406, délivrant une tension par exemple comprise entre environ 3 V et 5 V, charge ainsi la capacité de stockage 410 à travers la diode Schottky 408 qui permet d'éviter une fuite du courant depuis la capacité de stockage 410 vers la cellule photovoltaïque 406 lorsque cette dernière ne fournit plus de courant (lorsqu'elle n'est plus éclairée). La tension Vcc est fournie sur une sortie 412 des moyens d'alimentation 402. La résistance interne de la capacité de stockage 410, de l'ordre de quelques centaines de mΩ, n'est pas un problème car la consommation en courant du dispositif 400 est bien inférieure à environ 1 mA, ce qui équivaut à quelques centaines de kΩ en charge.

La figure 7A représente un exemple de réalisation des moyens 404, ici sous la forme d'un oscillateur. L'oscillateur comporte un amplificateur opérationnel 414, par exemple de type LPV7215, qui délivre sur une sortie 416 de l'oscillateur un signal carré de fréquence égale à environ 0,5 Hz.

L'amplificateur opérationnel 414 est alimenté par la tension Vcc et est également relié à la masse. Un tel signal carré permet d'obtenir un clignotement de la LED 102 toutes les 2 secondes environ. L'oscillateur comporte une entrée 418 sur laquelle est appliquée la tension +Vcc. Cette entrée 418 est reliée électriquement en série à deux résistances 420 et 422, par exemple de valeur égale à environ 10 MΩ. L'entrée positive de l'amplificateur opérationnel 414 est reliée à la liaison entre les deux résistances 420 et 422. La sortie 416 est reliée électriquement à l'entrée positive de l'amplificateur opérationnel 414 par l'intermédiaire d'une résistance 424 par exemple de valeur égale à environ 22 MΩ. La sortie 416 est également reliée électriquement à l'entrée négative de l'amplificateur opérationnel 414 par l'intermédiaire d'une résistance 426 par exemple de valeur égale à environ 10 MΩ. Une capacité 428, par exemple égale à environ 470 nF, relie l'entrée négative de l'amplificateur opérationnel 414 à la masse.

En variante, l'oscillateur peut être réalisé à partir de composants différents de ceux représentés sur la figure 7A, par exemple en utilisant deux inverseurs.

En alternative à l'oscillateur, il est possible de réaliser les moyens 404 sous la forme d'un multivibrateur à trigger de Schmitt dont un exemple de réalisation est représenté sur la figure 7B. Ce multivibrateur comporte un Trigger de Schmitt 407 dont une entrée est couplée à une capacité 409 et comportant une boucle de rétroaction entre son entrée et sa sortie, une résistance 411 étant disposée sur cette boucle de rétroaction.

Un tel multivibrateur a pour avantage, par rapport à l'oscillateur représenté sur la figure 7A, de fournir en sortie un signal oscillant à partir d'une tension d'alimentation plus faible (par exemple égale à environ 0,8 V) que celle à partir de laquelle l'oscillateur fournit un signal oscillant. En contrepartie, un tel multivibrateur consomme plus de courant que l'oscillateur à partir d'une tension égale à environ 1,6 V. De plus, la fréquence du signal fourni en sortie par le multivibrateur est fonction de la valeur de la tension d'entrée, contrairement à l'oscillateur qui fournit un signal oscillant dont la fréquence est bien moins dépendante de la valeur de la tension d'entrée.

Les capacités 104 et 106 utilisées dans le dispositif 400 ont par exemple chacune une valeur égale à environ 1 μF. De plus, dans l'exemple décrit ici, des résistances ont été interposées, dans le circuit multiplicateur de tension 100, entre le potentiel d'alimentation +Vcc et les commutateurs 110 et 114.

Pour une tension égale à environ 2V aux bornes de la LED 102, la consommation du circuit 100 est comprise entre environ 5 pA et 7 pA, ce qui permet d'obtenir de bons flashs d'éclairement de la LED 102.

En considérant que le circuit 100 fonctionne à partir d'environ 1,6 V, et en chargeant la capacité de stockage 410 à environ 3 V, cela donne une tension de fonctionnement égale à environ 1,4 V. Etant donné que :

$$Q = t.I = CV$$

avec I : courant délivré par la capacité de stockage 410, en A ;
C : valeur de la capacité de stockage 410, en F ;
V : tension aux bornes de la capacité de stockage 410, en V.

On a donc un temps $t = 1,4 * 0,2 / 10.10^{-6}$, soit t = 7,7 heures (en ayant arrondi la consommation à 10 pA en moyenne sur toute la plage de tension vue par la LED 102). Le dispositif 400 peut ainsi faire clignoter la LED 102 pendant toute une nuit, la capacité de stockage 410 ayant été chargée au cours de la journée par la cellule photovoltaïque 406. La valeur de la capacité de stockage 410 est choisie en fonction notamment du temps de fonctionnement souhaité du dispositif 400 lorsque les moyens d'alimentation 402 ne fournissent plus de tension et de courant.

La taille de la cellule photovoltaïque 406 est dimensionnée en fonction de l'éclairage attendu.

Ainsi, pour un fonctionnement du dispositif 400 en intérieur, la cellule photovoltaïque 406 peut être une grande cellule de type amorphe, tandis que pour un fonctionnement du dispositif 400 en extérieur, la cellule photovoltaïque 406 peut être une petite cellule de type monocristallin.

La partie clignotante du dispositif 400 (LED 102 + circuit multiplicateur de tension 100) a une consommation égale à environ 10 pA, à 0,5 Hz, soit un peu moins de 1 Coulomb sur 24 heures. Pour que le dispositif 400 fonctionne durant une nuit complète (lorsque la cellule photovoltaïque 406 arrête de fournir du courant), l'alimentation électrique du dispositif 400 nécessite dans ce cas une capacité d'environ 0,5 Farad, voire moins si la tension fournie aux bornes de la capacité de stockage 410 est par exemple supérieure à environ 1,5 V, par exemple comprise entre environ 1,5 V et 3 V. Pour cela, la cellule photovoltaïque 406 peut être dimensionnée telle qu'elle soit apte à collecter, sous un éclairage peu favorable, comme par exemple à l'intérieur d'une maison où le flux lumineux reçu par la cellule 406 peut être compris entre environ 100 et 200 lux, quelques dizaines de microampères, par exemple entre environ 30 pA et 50 pA, durant 8 heures sous 3 volts (soit au moins 90 $\mu$W), ce qui peut être obtenu avec une cellule photovoltaïque amorphe présentant une surface active comprise entre environ 1 et 2 cm$^2$, composée de 4 à 8 éléments de conversion d'énergie. Dans le cas d'une utilisation du dispositif 400 en extérieur au soleil (flux lumineux compris entre environ 50000 et 100000 lux), la même cellule amorphe produit un courant de plusieurs mA, ce qui permet d'obtenir le même résultat avec un temps de charge de la capacité de stockage 410 de l'ordre de 16 minutes. Si la cellule 406 présente un rendement d'environ 15 %, une surface d'environ 1 mm$^2$ serait même suffisante (par exemple obtenue par la mise en série de plusieurs photodiodes de type PIN utilisées comme dispositifs de conversion photovoltaïque).

L'oscillateur, ou le multivibrateur, et le circuit multiplicateur de tension 100, 200 ou 300 peuvent être réalisés sous la forme d'un circuit intégré spécifique destiné à être assemblé avec la LED 102 et les moyens d'alimentation 402 sur un même support.

En variante, le dispositif 400 peut comporter en outre des moyens aptes à déclencher et arrêter le clignotement de la LED 102, par exemple pour ne la faire fonctionner que la nuit, ou utiliser un détecteur de présence ou de mouvement. Il est par exemple possible que ces moyens détectent l'arrêt de la génération de courant par la cellule photovoltaïque 406 et déclenchent le clignotement de la LED 102 à partir de ce moment.

Dans une autre variante non représentée, le dispositif 400 peut comporter un dispositif élévateur de tension classique disposé entre la source d'alimentation électrique (par exemple la cellule photovoltaïque 406) et la capacité de stockage 410. Un tel dispositif élévateur de tension permet d'augmenter la tension aux bornes de la capacité de stockage 410, et donc l'énergie stockée dans la capacité de stockage 410, dans la limite supportable par la capacité de stockage 410, par exemple égale à 5 V.

Les moyens d'alimentation 402 peuvent comporter, à la place d'une cellule photovoltaïque couplée à une capacité de stockage, une pile classique.

Le type de pile utilisée est choisi en fonction de sa durée de vie, du coût, etc. Une telle pile peut correspondre à une pile de type AA ou encore une pile de type bouton au lithium.

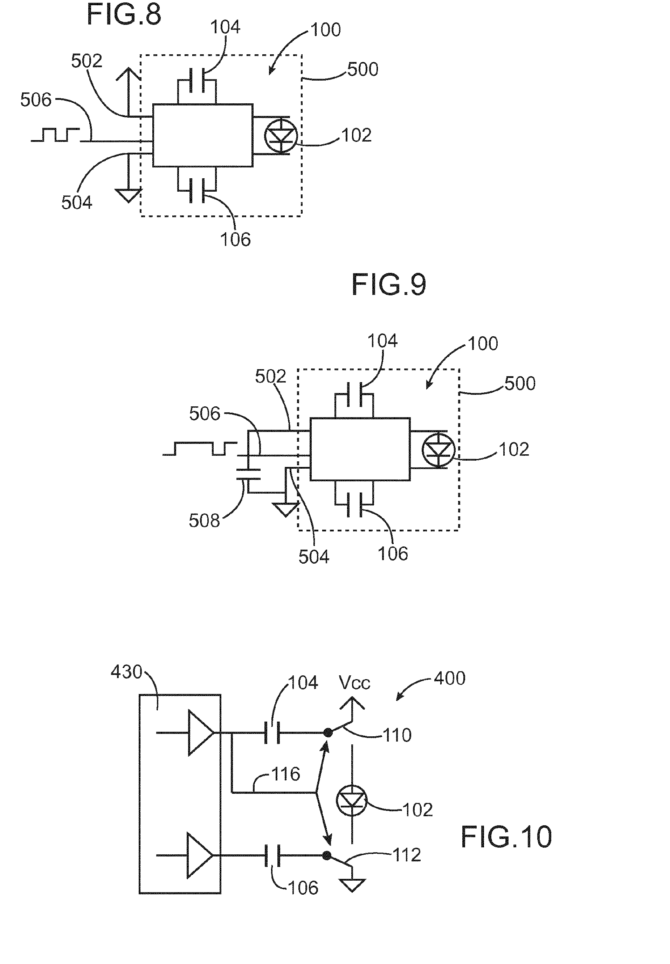

Le circuit multiplicateur de tension 100, 200 ou 300, précédemment décrit peut également être utilisé pour réaliser un dispositif de type LED « basse tension ». Un tel dispositif 500 est représenté sur la figure 8.

La LED 102, les deux capacités 104, 106 et le circuit multiplicateur de tension 100, 200 ou 300 sont intégrés sur un même support. Le dispositif 500 comporte également deux entrées d'alimentation 502 et 504 respectivement reliées à un potentiel d'alimentation Vcc et à la masse, et une troisième entrée 506 sur laquelle est appliqué le signal de commande délivré par un oscillateur ou un multivibrateur et destiné à commander les phases de charge / décharge des capacités 104 et 106 du circuit multiplicateur de tension.

En utilisant des capacités 104 et 106 se chargeant rapidement, obtenues en utilisant, dans le circuit multiplicateur de tension 100, des commutateurs peu résistifs (par exemple égaux à environ 100 ohms) et de valeurs égales à environ 10 $\mu$F, la constante de temps $\tau$ du dipôle RC équivalent est égale à environ 1 ms. En injectant en entrée du dispositif 500 un signal de commande sous la forme d'un signal carré de fréquence égale à environ 1 kHz, la LED clignotera très rapidement au point que la persistance rétinienne laissera l'apparence d'une LED allumée en permanence.

Un tel dispositif 500 sera avantageusement utilisé avec des LED présentant des tensions de seuil importantes, par exemple des LED bleues ou blanches, le dispositif 500 permettant de faire fonctionner ces LED avec des tensions inférieures à ces tensions de seuil.

En variante, le dispositif 500 peut également comporter l'oscillateur ou le multivibrateur intégré avec les autres éléments du dispositif 500.

Dans une autre variante représentée sur la figure 9, une capacité tampon 508 relie entre elles les entrées d'alimentation 502 et 504. La valeur de la capacité tampon 508 est supérieure ou égale aux valeurs des capacités 104 et 106 du circuit multiplicateur de tension. Cette capacité supplémentaire 508 stocke de l'énergie quand le signal de commande appliqué sur l'entrée 506 a une valeur « 1 » (par exemple +Vcc).

Lorsque le signal de commande passe à la valeur « 0 », bien que l'alimentation électrique disparaisse durant un court instant, la capacité tampon 508 conserve localement la charge pour permettre à l'ensemble de fonctionner. Bien que non représentée, une diode, par exemple de type Schottky, est présente entre la capacité 508 et l'alimentation électrique pour limiter ou empêcher un éventuel retour de courant depuis la capacité tampon 508 vers l'alimentation.

Les dispositifs lumineux 400 ou 500 précédemment décrits comportent de nombreuses applications possible :

- signalement d'obstacles la nuit ou en cas de panne de courant, notamment appliqué au domaine domestique ;
- insertion dans des jointures de carrelage, au sol, au mur, en extérieur, etc. ;
- insertion dans des nez de marche ou des coins des marches d'un escalier, dans des couloirs ou des seuils de porte, des poignées de porte, des interrupteurs ;
- utilisation dans des endroits généralement peut éclairés, par exemple un garage ;
- utilisation décorative : boutons de vêtement, bijoux (bracelets, pendentifs), porte-clefs, articles publicitaires, verre clignotant, jouets, décorations de Noël, etc.

Le dispositif 400 ou 500 peut comporter une ou plusieurs LED et un microcontrôleur basse tension permettant de piloter le clignotement des LED Un tel dispositif 400 est représenté sur la figure 10. Par rapport au circuit 200 représenté sur la figure 3, le dispositif 400 comporte un microcontrôleur 430 remplaçant les inverseurs 202 et 204. Le microcontrôleur 430 comporte deux sorties reliées aux capacités 104 et 106, le microcontrôleur 430 étant programmé pour délivrer sur ces deux sorties des signaux de valeurs opposées. Le fonctionnement du dispositif 400 est similaire aux circuits précédemment décrits.

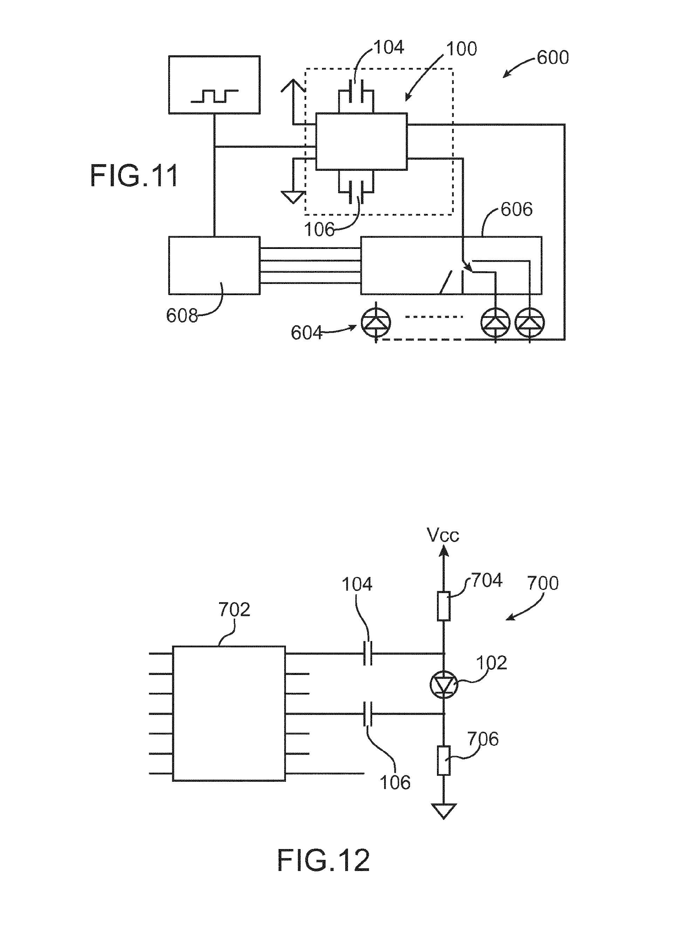

La figure 11 représente un autre dispositif 600 utilisant le circuit multiplicateur de tension 100, 200 ou 300, et réalisant un éclairage de type chenillard avec plusieurs LED.

Le dispositif 600 comporte le circuit multiplicateur de tension 100 couplé à un oscillateur 602, par exemple similaire à l'oscillateur précédemment décrit en liaison avec la figure 7A. Le dispositif 600 comporte également plusieurs LED 604 destinées à s'allumer successivement. Pour cela, le dispositif 600 comporte un multiplexeur analogique 606 permettant de relier l'une des sorties du circuit multiplicateur de tension 100 (correspondant par exemple au commutateur 112) à l'une des bornes des LED 604. L'autre sortie du circuit multiplicateur de tension 100 (correspondant par exemple au commutateur 110) est reliée électriquement à toutes les autres bornes des LED 604.

Le multiplexeur 606 est piloté par l'intermédiaire d'un compteur binaire 608. Le compteur binaire 608 est également relié à l'oscillateur 602, le signal de commande délivré par l'oscillateur 602 commandant l'incrémentation du compteur binaire 608. Le compteur binaire 608 peut compter sur n bits, le dispositif 600 pouvant comporter dans ce cas $2^n$ LED 604 (le multiplexeur comportant en outre $2^n$ sorties afin de pouvoir relier chacune des LED au circuit multiplicateur de tension 100).

On réalise ainsi un chenillard, sans augmenter significativement la consommation électrique du dispositif par rapport à un dispositif réalisant un clignotement d'une seule LED, en raison de l'absence d'amplificateur.

Afin d'éviter une éventuelle surtension au niveau des transistors du multiplexeur 606, il est possible de limiter le courant qui passe dans l'aiguillage du multiplexeur 606 en disposant une résistance, par exemple égale à environ 1 kΩ, à l'entrée du multiplexeur 606.

Une telle résistance de limitation peut également être disposée entre la LED 102 et le circuit multiplicateur de tension dans tous les circuits et dispositifs précédemment décrits. Une telle résistance permet de limiter les pics de courant sur l'alimentation.

Il est possible de disposer en cascade plusieurs circuits multiplicateurs de tension tels que précédemment décrits, afin d'obtenir en sortie une tension supérieure au triple de la tension d'entrée.

Toutefois, les valeurs des capacités des différents étages multiplicateurs de tension sont dans ce cas adaptées afin de perdre le moins de tension possible lors des décharges dans le ou les étages multiplicateurs suivants (avec par exemple des capacités égales à au moins 100 μF dans un premier étage et des capacités égales à quelques μF dans l'étage suivant).

On se réfère maintenant à la figure 12 qui représente un circuit multiplicateur de tension 700 selon un autre mode de réalisation.

Par rapport au circuit multiplicateur 100 précédemment décrit, la première borne de la capacité 104 et la deuxième borne de la deuxième capacité 106 sont reliées électriquement à un microcontrôleur 702, par exemple de type MSP430. Lors de la phase de charge des capacités, le microcontrôleur 702 relie la première borne de la première capacité 104 à la masse et la deuxième borne de la deuxième capacité 106 au potentiel +Vcc. Les capacités 104 et 106 sont alors chargées électriquement à travers deux résistances 704 et 706, la première résistance 704 étant reliée électriquement entre le potentiel +Vcc et la deuxième borne de la première capacité 104, la deuxième résistance 706 étant reliée électriquement entre la première borne de la deuxième capacité 106 et la masse. Le chargement des capacités 104 et 106 se produit du fait que la tension d'alimentation +Vcc est inférieure à la tension de seuil de la LED 102 qui assure au cours de la phase de charge des capacités 104 et 106 l'isolation électrique entre les deux résistances 704 et 706.

Une fois les capacités 104 et 106 chargées, le microcontrôleur 702 commute dans un deuxième état dans lequel la première borne de la première capacité 104 est reliée électriquement au potentiel +Vcc et dans lequel la deuxième borne de la deuxième capacité 106 est reliée électriquement à la masse. Les capacités 104 et 106 se déchargent alors à travers la LED 102 car la tension au niveau de la deuxième borne de la première capacité 104 augmente et la tension sur la première borne de la deuxième capacité 106 diminue par pompage de charge, la tension aux bornes de la LED 102 dépassant alors la tension de seuil de celle-ci. Cette décharge à travers la LED 102 entraîne l'allumage de la LED 102.

La durée d'allumage de la LED 102 est de l'ordre de 20 microsecondes, et les charges fournies par les capacités 104 et 106 sont de l'ordre de 2 microcoulomb (environ 2 fois 1 microfarad sous 1 volt). Ceci correspond à un courant dans la LED 102 d'environ 100 mA : c'est ce qui provoque le flash lumineux. L'échauffement de la LED est négligeable compte tenu de la durée très courte du flash lumineux.

Lors de la décharge des capacités 104 et 106 dans la LED 102, comme la tension sur la deuxième borne de la première capacité 104 augmente, un courant va également parcourir la résistance 704 (et de même pour la résistance 706). Une tension d'environ 1 volt sur une résistance d'environ 47 kohm correspond un courant de 21 microampères, ce qui est largement négligeable devant le courant d'une centaine de milliampère qui traverse la LED 102 lors de la phase de décharge, et très acceptable comme perte d'énergie. Il est aussi possible que les résistances 704 et 706 aient chacune une valeur par exemple égale à environ 100 kohm, ou toute autre valeur adaptée (par exemple 10 kOhm).

Dans cet autre mode de réalisation, le microcontrôleur 702 forme une partie des moyens de couplage du circuit multiplicateur 700 et des moyens de commande de ce circuit 700. Les résistances 704 et 706 forment également une partie des moyens de couplage du circuit 700. Enfin, la charge formée par la LED 102 forme également une partie des moyens de couplage et de commande du circuit du fait que la tension seuil de cette charge détermine lorsque la LED 102 est passante ou non.

Ce mode de réalisation a pour avantage d'être moins couteux du fait qu'il ne fait pas appel à un circuit pour réaliser les quatre commutateurs 108, 110, 112 et 114. De plus, il est possible de régler facilement l'intensité des flashs lumineux par programmation du microcontrôleur 702 en jouant sur la durée du créneau de la phase de décharge des capacités.

Il est également possible d'augmenter l'intensité du courant traversant les capacités 104 et 106 en mettant plusieurs broches du microcontrôleur 702 en parallèle sur chacune des capacités. Cela permet de raccourcir la durée de la phase de décharge des capacités. Si deux sorties du microcontrôleur 702 sont mises en parallèle sur chaque capacité, il est alors possible de diviser cette durée par 2 pour un résultat approximativement identique au premier ordre, l'intensité maximale obtenue restant dans des valeurs acceptables.

**Revendications**

1. Circuit (100, 200, 300, 700) multiplicateur d'une tension Vcc destinée à être appliquée sur au moins une première entrée du circuit (100, 200, 300, 700), comportant au moins :

   - une première (104) et une deuxième (106) capacités aptes à stocker des charges électriques ;
   - des moyens de couplage (102, 108, 110, 112, 114, 202, 204, 302, 304, 702, 704, 706) aptes à coupler électriquement, dans un premier état, une première borne de chacune des capacités (104, 106) à un potentiel électrique nul et une deuxième borne de chacune des capacités (104, 106) à un potentiel électrique égal à Vcc, et aptes à coupler électriquement, dans un deuxième état, la première borne de la première capacité (104) au potentiel électrique Vcc, la deuxième borne de la deuxième capacité (106) au potentiel électrique nul, la deuxième borne de la première capacité (104) à une première borne de sortie du circuit (100, 200, 300, 700), et la première borne de la deuxième capacité (106) à une deuxième borne de sortie du circuit (100, 200, 300, 700) ;
   - des moyens de commande (116, 702) aptes à commander le passage d'un état, correspondant au premier ou au deuxième état, à un autre état, correspondant respectivement au deuxième état ou au premier état.

2. Circuit (100, 200, 300) selon la revendication 1, dans lequel les moyens de couplage comportent :

   - un premier moyen de connexion (108, 202) apte à relier électriquement, dans le premier état, la première borne de la première capacité (104) au potentiel électrique nul, ou, dans le deuxième état, au potentiel électrique Vcc ;
   - un deuxième moyen de connexion (110, 302) apte à relier électriquement, dans le premier état, la deuxième borne de la première capacité (104) au potentiel électrique Vcc, ou, dans le deuxième état, à la première borne de sortie ;
   - un troisième moyen de connexion (112, 304) apte à relier électriquement, dans le premier état, la première borne de la deuxième capacité (106) au potentiel électrique nul, ou, dans le deuxième état, à la deuxième borne de sortie ;
   - un quatrième moyen de connexion (114, 204) apte à relier électriquement, dans le premier état, la deuxième borne de la deuxième capacité (106) au potentiel électrique Vcc, ou, dans le deuxième état, au potentiel électrique nul ;
   chacun des premier, deuxième, troisième et quatrième moyens de connexion comportant au moins un commutateur (108, 110, 112, 114) ou un inverseur CMOS (202, 204, 302, 304) ;
   et dans lequel les moyens de commande comportent une deuxième entrée du circuit (100, 200, 300) destinée à recevoir un signal de commande (116).

3. Circuit (200, 300) selon la revendication 2, dans lequel le premier moyen de connexion comporte un inverseur CMOS (202) destiné à être alimenté électriquement par la tension Vcc, la deuxième entrée du circuit (200, 300) est reliée électriquement à une entrée (206) dudit inverseur CMOS (202) et une sortie (208) dudit inverseur CMOS (202) est reliée électriquement à la première borne de la première capacité (104).

4. Circuit (200) selon la revendication 3, dans lequel le deuxième et le troisième moyens de connexion comportent chacun un commutateur (110, 112) destiné à être commandé par un signal délivré sur la sortie (208) de l'inverseur CMOS (202) du premier moyen de connexion.

**5.** Circuit (200, 300) selon l'une des revendications 2 à 4, dans lequel le quatrième moyen de connexion comporte un inverseur CMOS (204) destiné à être alimenté électriquement par la tension Vcc, la première borne de la première capacité (104) est reliée électriquement à une entrée (210) de l'inverseur CMOS (204) du quatrième moyen de connexion et une sortie (212) de l'inverseur CMOS (204) du quatrième moyen de connexion est reliée électriquement à la deuxième borne de la deuxième capacité (106).

**6.** Circuit (300) selon l'une des revendications 2 à 5, dans lequel le deuxième moyen de connexion comporte un inverseur CMOS (302) comprenant au moins deux transistors MOS dont des sources sont reliées électriquement au potentiel électrique Vcc et à la première borne de sortie du circuit (300), la deuxième borne de la première capacité (104) est reliée électriquement à une sortie (308) de l'inverseur CMOS (302) du deuxième moyen de connexion et la première borne de la première capacité (104) est reliée électriquement à une entrée (306) de l'inverseur CMOS (302) du deuxième moyen de connexion.

**7.** Circuit (300) selon l'une des revendications 2 à 6, dans lequel le troisième moyen de connexion comporte un inverseur CMOS (304) comprenant au moins deux transistors MOS dont des sources sont reliées électriquement au potentiel électrique nul et à la deuxième borne de sortie du circuit (300), la première borne de la deuxième capacité (106) est reliée électriquement à une sortie (312) de l'inverseur CMOS (304) du troisième moyen de connexion et la deuxième borne de la deuxième capacité (106) est reliée électriquement à une entrée (310) de l'inverseur CMOS (304) du troisième moyen de connexion.

**8.** Circuit (700) selon la revendication 1, dans lequel les moyens de couplage et les moyens de commande comportent :

- un microcontrôleur (702) apte à relier électriquement, dans le premier état, la première borne de la première capacité (104) au potentiel électrique nul, ou, dans le deuxième état, au potentiel électrique Vcc, et apte à relier électriquement, dans le premier état, la deuxième borne de la deuxième capacité (106) au potentiel électrique Vcc, ou, dans le deuxième état, au potentiel électrique nul ;
- au moins une charge électrique (102) destinée à être alimentée électriquement par une tension délivrée entre la première et la deuxième borne de sortie du circuit multiplicateur (700) et présentant une tension de seuil destinée à être inférieure à la tension Vcc ;
- une première résistance électrique (704) reliée électriquement entre le potentiel électrique Vcc et la première borne de sortie du circuit (700) ;
- une deuxième résistance électrique (706) reliée électriquement entre la deuxième borne de sortie du circuit (700) et le potentiel électrique nul.

**9.** Dispositif électronique (400, 500, 600) comportant au moins :

- un circuit multiplicateur (100, 200, 300, 700) selon l'une des revendications précédentes ;
- au moins une charge électrique (102, 604) destinée à être alimentée électriquement par une tension délivrée entre la première et la deuxième borne de sortie du circuit multiplicateur (100, 200, 300, 700).

**10.** Dispositif électronique (400, 500, 600) selon la revendication 9, dans lequel la charge électrique comporte au moins une LED (102, 604).

**11.** Dispositif électronique (400, 500, 600) selon l'une des revendications 9 ou 10, comportant en outre :

- des moyens d'alimentation électrique (402) aptes à délivrer sur une sortie (412) une tension électrique Vcc ;
- des deuxièmes moyens de commande (404) aptes à délivrer sur une sortie (416) un signal de commande oscillant entre deux valeurs distinctes ;
dans lequel la première entrée du circuit multiplicateur (100, 200, 300, 700) est reliée électriquement à la sortie (412) des moyens d'alimentation électrique (402), et dans lequel les moyens de commande (116) du circuit multiplicateur (100, 200, 300, 700) sont reliés électriquement à la sortie (416) des deuxièmes moyens de commande (404).

**12.** Dispositif électronique (400, 500, 600) selon la revendication 11, dans lequel les moyens d'alimentation électrique (402) comportent des moyens de conversion d'énergie photovoltaïque (406) couplés à au moins une capacité (410) apte à stocker une énergie fournie par les moyens de conversion (406) et à fournir aux bornes de ladite capacité (410) la tension électrique Vcc, ou dans lequel les moyens d'alimentation électrique (402) comportent au moins une pile ou au moins une capacité (506) apte à stocker des charges électriques issues du signal de commande.

**13.** Dispositif électronique (400, 500, 600) selon l'une des revendications 11 ou 12, dans lequel les deuxièmes moyens de commande (404) comportent au moins un oscillateur ou un multivibrateur, et sont couplés aux moyens d'alimentation électrique (402) et au circuit multiplicateur (100, 200, 300, 700).

**14.** Dispositif électronique (600) selon l'une des revendications 9 à 13, dans lequel la charge électrique comporte une pluralité de LED (604) et au moins un multiplexeur (606) apte à coupler alternativement chacune des LED (604) avec la première et la deuxième bornes de sortie du circuit multiplicateur (100, 200, 300, 700).

**15.** Procédé de multiplication d'une tension Vcc, comportant au moins les étapes de :

    a) couplage d'un potentiel électrique nul à une première borne de chacune d'une première (104) et d'une deuxième (106) capacités aptes à stocker des charges électriques, et d'un potentiel électrique égal à Vcc à une deuxième borne de chacune des deux capacités (104, 106), chargeant électriquement la première (104) et la deuxième (106) capacité, puis
    b) application du potentiel électrique Vcc sur la première borne de la première capacité (104), et d'un potentiel électrique nul sur la deuxième borne de la deuxième capacité (106), une tension de sortie correspondant à la tension Vcc multipliée étant récupérée entre la deuxième borne de la première capacité (104) et la première borne de la deuxième capacité (106).

**16.** Procédé selon la revendication 15, dans lequel les étapes a) et b) sont répétées successivement, la tension de sortie étant appliquée sur des bornes d'au moins une LED (102, 604).

FIG.1

FIG.2

FIG.3

FIG.4

FIG.5

FIG.7A

FIG.6

FIG.7B

## FIG.8

## FIG.9

## FIG.10

FIG.11

FIG.12

Europäisches
Patentamt

European
Patent Office

Office européen
des brevets

**RAPPORT DE RECHERCHE EUROPEENNE**

Numéro de la demande

EP 12 17 4900

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| X | US 2007/200615 A1 (EKLUND JAN-ERIK [SE] ET AL) 30 août 2007 (2007-08-30) * figures 2,3a,3b * * alinéas [0025] - [0035] * ----- | 1-16 | INV. H02M3/07 |
| A | US 5 436 587 A (CERNEA RAUL-ADRIAN [US]) 25 juillet 1995 (1995-07-25) * figure 5 * ----- | 3-7 | |
| X | US 6 563 235 B1 (MCINTYRE WILLIAM J [US] ET AL) 13 mai 2003 (2003-05-13) * figures 10,36a,36b * ----- | 1-4,14, 15 | |
| X | US 5 684 682 A (ZHONG ZHONG KAI [US] ET AL) 4 novembre 1997 (1997-11-04) * figures 3,7 * ----- | 1 | |
| A | EP 1 505 715 A2 (LG ELECTRONICS INC [KR]) 9 février 2005 (2005-02-09) * figures 3,6 * ----- | 3 | |
| X | US 7 466 572 B1 (CHUI SIEW YONG [SG] ET AL) 16 décembre 2008 (2008-12-16) * figures 2A-2E * ----- | 1 | DOMAINES TECHNIQUES RECHERCHES (IPC)  H02M |
| X | US 2008/157857 A1 (FUJIWARA HIROFUMI [JP]) 3 juillet 2008 (2008-07-03) * figures 1,3,4,6,7 * ----- | 1,2 | |

Le présent rapport a été établi pour toutes les revendications

| Lieu de la recherche | Date d'achèvement de la recherche | Examinateur |
|---|---|---|
| La Haye | 15 novembre 2012 | Gotzig, Bernhard |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
..............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 17 4900

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-11-2012

| Document brevet cité au rapport de recherche | | Date de publication | Membre(s) de la famille de brevet(s) | | Date de publication |
|---|---|---|---|---|---|
| US 2007200615 | A1 | 30-08-2007 | CN<br>DE<br>SE<br>US | 101043177 A<br>102007008519 A1<br>0600439 A<br>2007200615 A1 | 26-09-2007<br>06-09-2007<br>29-08-2007<br>30-08-2007 |
| US 5436587 | A | 25-07-1995 | AUCUN | | |
| US 6563235 | B1 | 13-05-2003 | AUCUN | | |
| US 5684682 | A | 04-11-1997 | AUCUN | | |
| EP 1505715 | A2 | 09-02-2005 | CN<br>EP<br>JP<br>KR<br>US | 1581656 A<br>1505715 A2<br>2005057999 A<br>20050014377 A<br>2005052170 A1 | 16-02-2005<br>09-02-2005<br>03-03-2005<br>07-02-2005<br>10-03-2005 |
| US 7466572 | B1 | 16-12-2008 | US<br>US | 7466572 B1<br>7729141 B1 | 16-12-2008<br>01-06-2010 |
| US 2008157857 | A1 | 03-07-2008 | CN<br>JP<br>JP<br>US | 101212176 A<br>5038706 B2<br>2008167523 A<br>2008157857 A1 | 02-07-2008<br>03-10-2012<br>17-07-2008<br>03-07-2008 |

EPO FORM P0460

Pour tout renseignement concernant cette annexe : voir Journal Officiel de l'Office européen des brevets, No.12/82